# EUROPEAN PATENT SPECIFICATION

(11) **EP 3 909 800 B1**
(45) Date of publication and mention of the grant of the patent: **27.09.2023**
(21) Application number: 20174480.2
(22) Date of filing: 13.05.2020
(51) Int. Cl.: B60L 5/12

(54) **A TROLLEY POLE ARRANGEMENT, AND A METHOD FOR PREVENTING SHORT CIRCUITS AND MECHANICAL DAMAGES IN A TROLLEY POLE ARRANGEMENT**
KATZENPOLANORDNUNG UND VERFAHREN ZUR VERHINDERUNG VON KURZSCHLÜSSEN UND MECHANISCHEN BESCHÄDIGUNGEN IN EINER KATZENPOLANORDNUNG
AGENCEMENT DE PERCHE DE TROLLEY ET PROCÉDÉ DE PRÉVENTION CONTRE LES COURTS-CIRCUITS ET LES DOMMAGES MÉCANIQUES DANS UN AGENCEMENT DE PERCHE DE TROLLEY

(43) Date of publication of application: 17.11.2021
(73) Proprietor: Sandvik Mining and Construction Oy, 33330 Tampere (FI)
(72) Inventor: JUNTUNEN, Raimo, 33330 Tampere (FI); KOMU, Raimo, 33330 Tampere (FI)
(74) Representative: Sandvik

(56) References cited:
- DE-A1-102011 076 615
- DE-A1-102011 076 623
- US-A- 3 152 673
- US-A1- 2015 352 959

## Description

### FIELD OF THE INVENTION

The invention relates to a trolley pole arrangement for a mobile work machine . Further, the invention relates also to a method for preventing short-circuits in a trolley pole arrangement.

### BACKGROUND OF THE INVENTION

Trolley-assisted or completely trolley-fed vehicles are used especially in public transport. Trolley-systems have been used to supply power for movable machines and vehicles also in underground mining. Especially in trolley systems with two trolley poles trolley-current collectors may collide with each other. This takes place especially if the vehicle is moving, or is in a tilted position, and lowers or raises the current collectors (trolley poles). This may be a problem in areas with poorer road conditions than on paved roads, for example in mines.

A collision of the trolley current collectors may result to short circuit.

An exemplary trolley pole arrangement is known from DE 10 2011 076623 A1.

### OBJECTIVE OF THE INVENTION

The objective of the invention is to alleviate the disadvantages mentioned above.

### SUMMARY OF THE INVENTION

According to the invention a trolley pole arrangement according to independent device claim 1 is provided.

The invention further provides a method for preventing short circuits and mechanical damages in a trolley pole arrangement according to independent method claim 14.

The invention exhibits, among the other features of the independent claims, the following features:
- a first trolley pole having a first end and a distal end extending a distance from the first end,
   - a second trolley pole having a first end and a distal end extending a distance form the first end,
   - a support and moving arrangement for the first trolley pole and for the second trolley pole,
   - the first trolley pole is configured to be arranged from the first end to the support and moving arrangement,
   - the second trolley pole is configured to be arranged from the first end to the support and moving arrangement. According to the invention an intermediate member
is arranged between the first trolley pole and the second trolley pole such that a first end of the intermediate member is arranged at a first length on the first trolley pole, wherein the first length is measured from the first end of the first trolley pole and a second end of the intermediate member is arranged at a second length on the second trolley pole, wherein the second length is measured from a first end of the second trolley pole, and wherein the first length and the second length are of different lengths.

The technical effect is that the with the intermediate member arranged between the trolley poles the trolley poles or the current collectors can be kept at a distance from each other and short circuits can be effectively avoided. Duo to the intermediate member the trolley poles or the current collectors do not get too close to each other. The intermediate member may also bind the adjacent first and second trolley poles with each other, so that a distance between the first and second trolley poles does not extend too much. The invention provides a sound and a cost-effective solution for solving the problems of the prior art.

In a further embodiment of the arrangement, the intermediate member is an elongated member. An advantage of an elongated shape for the intermediate member is that it is light enough and has e.g. a good reach/weight-ratio.

In an embodiment of the arrangement, the intermediate member comprises a flexible portion. An advantage of this is that the intermediate member can be twisted according to the movements of the trolley poles.

In an embodiment of the arrangement, the intermediate member comprises a stiffening member or a stiffening portion. An advantage of this is that the stiffening portion or the stiffening part secures that the distance between the trolley poles remain at a level in which the current collectors cannot collide.

In an embodiment of the arrangement, the stiffening member is a pipe or a bar or a chain. An advantage is that the pipe or the bar has a suitable form that enables various embodiments for the arrangement and for the intermediate member.

In an embodiment of the arrangement, the intermediate member comprises a protective jacket. An advantage for this is that the protective jacket, such as a tube, enables a suitable form to the intermediate member and enables also an effective protection for the connection parts of the intermediate member needed for the connection to the trolley poles.

In an embodiment of the arrangement, a length of the stiffening member is shorter than a distance between the first trolley pole and the second trolley pole when a length axis of the intermediate member is perpendicular to length axis of the first trolley pole and the second trolley pole. An advantage for this is that the needed flexibility and stiffness of the intermediate member can be adjusted by the length of the stiffening part in relation to the flexible part or the distance between the first trolley pole and the second trolley pole.

In an embodiment of the arrangement, the intermediate member comprises a first connecting element in a first end. An advantage for arranging the connecting element is that various ways of connection may be used for connecting the intermediate member to the trolley pole.

In an embodiment of the arrangement, the intermediate member comprises a second connecting element in a second end. An advantage for arranging the connecting element is that various ways of connection may be used for connecting the intermediate member to the trolley pole.

In an embodiment of the arrangement, a first connecting element or a second connecting element is a strap, a rope or a loop member configured to be arranged to or around the trolley pole. An advantage of this is that a flexible connection can easily achieved by these. These are easily replaceable, for example during a service.

In an embodiment of the arrangement, the intermediate member is arranged on a lower portion of the trolley poles. An advantage for this is that a weight of the intermediate member arranged to the lower portion of the trolley poles does not unnecessary reduce a contact force needed for the current collectors to contact with the trolley lines.

In an embodiment of the arrangement, the intermediate member comprises an elastic member, elastic portion or a string member, such as a coil string member. An advantage for this is that it may have an accurate elasticity or flexibility.

In an embodiment of the arrangement, the intermediate member is hingedly connected to the first trolley pole or to the second trolley pole or to both, for example by a swivel joint. An advantage for this is the it allows a further solution for the intermediate member to twist with the movements of the trolley poles.

In an embodiment of the arrangement, the distal ends of the first trolley pole and the second trolley pole are each configured to receive a current collector. An advantage for this is the trolley poles may be arranged to have different kinds of current collectors for different embodiments.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 shows a simplified side view of a vehicle with a trolley pole arrangement,
Figure 2 shows a simplified front view of a vehicle with a trolley pole arrangement in a first position,
Figure 3 shows a simplified front view of a vehicle with a trolley pole arrangement in a second position,
Figure 4 shows a cross section of a trolley pole cut along line IV-IV in Figure 2,
Figure 5 is a detail of the trolley pole arrangement from Figure 4,
Figure 6 is a cross section of a further trolley pole arrangement,
Figure 7 is a cross section of yet another a trolley pole arrangement,
Figure 8 is a cross section of yet another trolley pole arrangement, and
Figure 9 shows a schematically a detail of an embodiment of a trolley pole arrangement.

In the figures, some embodiments are shown simplified for the sake of clarity. Similar parts are marked with the same reference numbers in the figures.

### DETAILED DESCRIPTION

The trolley pole arrangement described in this description may be arranged in a vehicle 100. The vehicle may be a mine machine or a construction machine may be e.g. a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, setting vehicles of gallery arcs or nets, a concrete spraying machine, a crusher, a measuring vehicle, or a passenger transport vehicle..

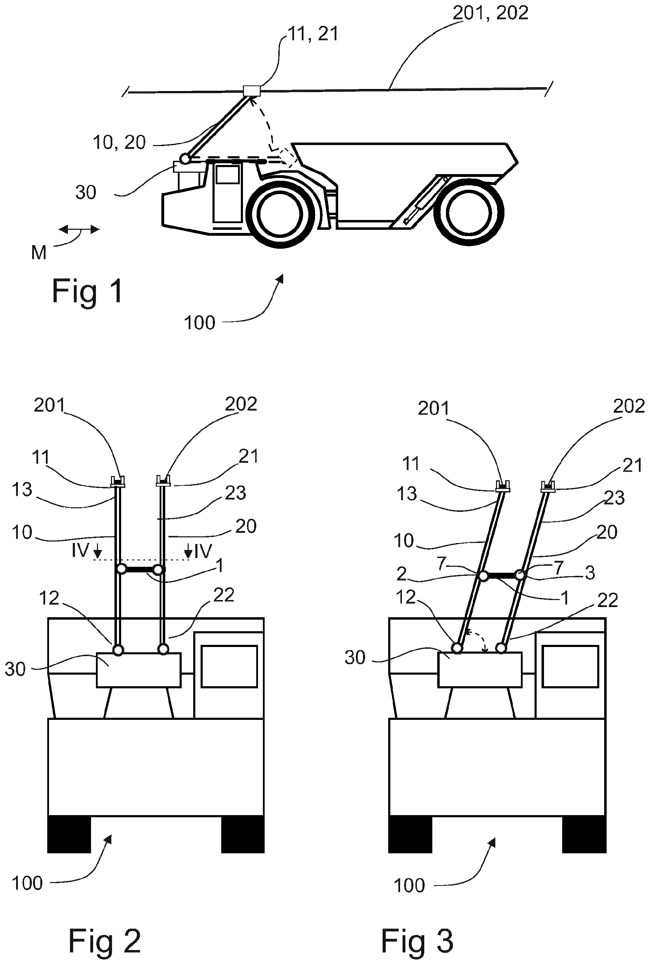

The vehicle may be arranged to receive current from trolley lines 201, 202 arranged at a set distance from each other and a distance from the vehicle 100. A trolley pole arrangement may be arranged to the vehicle 100. The trolley pole arrangement according to the invention comprises: a first trolley pole 10 having a first end 12 and a distal end 13 extending a distance from the first end, a second trolley pole 20 having a first end 22 and a distal end 23 extending a distance form a first end, and a support and moving arrangement 30. The distal ends 13, 23 of the first trolley pole 10 and the second trolley pole 20 may be each configured to receive a current collector 11, 21. The support and moving arrangement 30 may be arranged for supporting and moving the first trolley pole 10 and the second trolley pole 20 between a first position in which the current collectors 11, 21 may be in contact with the respective trolley lines 201, 202, and a second position in which the current collectors are not in contact with the respective trolley lines. In illustrative figure 1 the trolley poles 10, 20 are in the first position of (i.e. upper position). In the first position the current collectors 11, 21 of each trolley pole 10, 20 are in contact with the respective trolley lines 201, 202. The second position (i.e. lowered position) of the trolley poles 10, 20 is illustrated with dashed lines in Figure 1. The trolley poles 10, 20 may be lowered by the moving arrangement 30, for example, by turning the trolley poles 10, 20 around an axis that is in a horizontal cross direction with a main moving direction M of the vehicle.

The first trolley pole 10 and the second trolley pole 20 may be swivel sidewards, e.g. around an axis that is in a vertical cross direction with a main moving direction M of the vehicle. the moving arrangement may comprise raising and lowering trolley poles. The support and moving arrangement 30 may comprise positioning trolley poles 10, 20 or current collectors 11, 21 to centre.

The actuating arrangement in the support and moving arrangement 30 may comprise mechanically, electro-mechanically, pneumatically or hydraulically actuated device (s) . The actuating arrangement may comprise a spring actuated device for raising and keeping the trolley poles 10, 20 in the upper position. In an embodiment, the actuating arrangement may comprise electrically or pneumatically or hydraulically operated actuating device (s) . The electrically, pneumatically, or hydraulically operated actuating device (s) may be used for moving trolley poles 10, 20, for example from an upper position to a lower position.

According to the invention, the first trolley pole is configured to be arranged from the first end 12 to the support and moving arrangement 30. The second trolley pole 20 is configured to be arranged from the first end 22 to the support and moving arrangement 30.

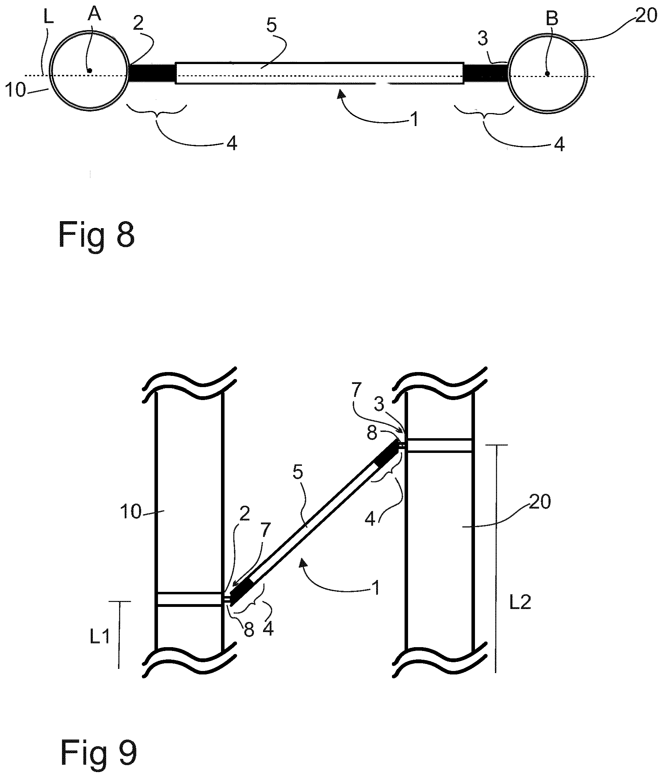

According to the invention an intermediate member (1)is arranged between the first trolley pole (10) and the second trolley pole (20)such that a first end of the intermediate member is arranged at a first length (L1) on the first trolley pole (10), wherein the first length is measured from the first end (12)of the first trolley pole and a second end of the intermediate member is arranged at a second length (L2)on the second trolley pole, wherein the second length is measured from a first end (22) of the second trolley pole, and wherein the first length and the second length are of different lengths; as shown in figure 9. The intermediate member 1 may keep the adjacent first and second trolley poles 10, 20 at a distance from each other. The intermediate member 1 may be arranged to bind the adjacent first and second trolley poles with each other. The intermediate member 1 may be arranged to keep the current collector 11 of the first trolley pole 10 and the current collector 21 of the second trolley pole 20 at a distance from each other. This may be achieved also when moving the trolley poles 10, 20 between the first and second positions.

The trolley poles may be moved separately or simultaneously. By keeping the trolley poles 10, 20 and their current collectors 11, 21 at a distance from each other with the intermediate member 1 contacts of them to each other and appearances of close circuits and mechanical damages may be prevented.

The intermediate member 1 may be arranged on the length between upper ends 11, 21 and lower ends 12, 22 of the adjacent trolley poles 10, 20. However, a preferable position for the intermediate member may be in the center portion of the trolley poles or on a lower portion of the trolley poles 10, 20. When positioning the intermediate member on the lower portion of the trolley poles an effect of the weight of the intermediate member is low to the moving arrangement 30.

In an embodiment the intermediate member 1 may be hingedly connected to the first trolley pole 10 or to the second trolley pole 20 or to both, for example by a swivel joint 7.

In an embodiment the intermediate member 1 may be an elongated member. In an example the intermediate member is a cross bar-like member hingedly connected between the first trolley pole and the second trolley pole.

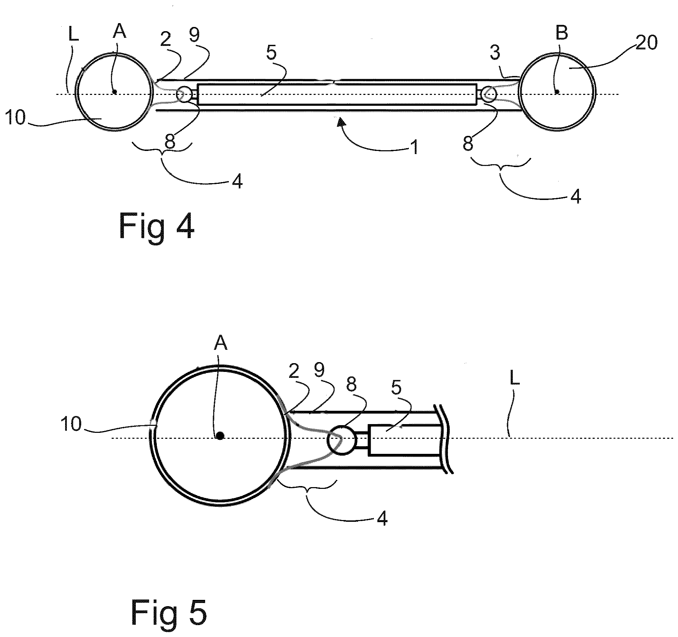

In an embodiment the intermediate member 1 may comprise a flexible portion 4. The flexible portion may allow the intermediate member to adapt to movements of the trolley poles. Figures 4 and 5 illustrate intermediate members which may be used in practising the invention. The flexible portion may be of elastic material such as rubber or plastic or other elastic material.

In an embodiment the intermediate member 1 may comprise a stiffening member or a stiffening portion 5. The stiffening member or the stiffening portion 5 may secure that the intermediate member 1 keeps the adjacent first and second trolley poles 10, 20 at a distance from each other.

In an embodiment the stiffening member 5 may be a pipe or a bar or a chain. The stiffening member 5 may be made of metal or plastic or of composite material.

In an embodiment the intermediate member 1 may comprise a protective jacket 9. The protective jacket 9 may be a pipe member. The protective jacket 9 may be a flexible member. The intermediate member 1 may comprise a flexible pipe member. The stiffening member 5 may be arranged inside the protective jacket 9, such as the pipe member. In an embodiment the stiffening portion 5 may be a part of a wall of the protective jacket 9, such as a wall of the pipe member. The stiffening part 5 may be arranged in a space surrounded by the wall of the protective jacket, such as the wall of the pipe member. For example, a friction between a protective jacket 9 and a stiffening member 5, e.g. a chain or other chain-like members that may comprise a serial assembly of connected pieces, may make them suitable for use as a stiffening member. The protective jacket may be placed tightly around the chain so that the intermediate member is stiff enough with a combination of the protective jacket and the chain.

In an embodiment, a length of the stiffening member 5 is shorter than a distance between the first trolley pole 10 and the second trolley pole 20 when a length axis L of the intermediate member 1 is perpendicular to length axis A, B of the first trolley pole and the second trolley pole. Therefore, a length of the intermediate member 1 may be longer that the length of a stiffening part or portion 5.

In an embodiment, the intermediate member 1 comprises a first connecting element 2 in a first end and a second connecting element 3 in a second end.

In an embodiment, a first connecting element 2 or a second connecting element 3 is a strap, a rope or a loop member configured to be arranged to or around the trolley pole 10, 20. The connecting of the intermediate members may be alternatively by fixing means, for example, by screw members to the trolley poles. Also, other known connecting arrangements may be used in connecting the intermediate member to trolley poles. The intermediate member (1) may comprise a counterpart 8 for the connecting element. The intermediate member may comprise a counterpart in each end for the connecting elements 2, 3. A connecting counterpart 8 may be a loop or an aperture arranged to each end of the intermediate member 1. A connecting counterpart 8 may be arranged to each end of the stiffening part 5. In an embodiment a connecting counterpart 8 is arranged to each end of a protective jacket 9.

In an embodiment the intermediate member 1 may comprise an elastic member or a string member 6, such as a coil string member.

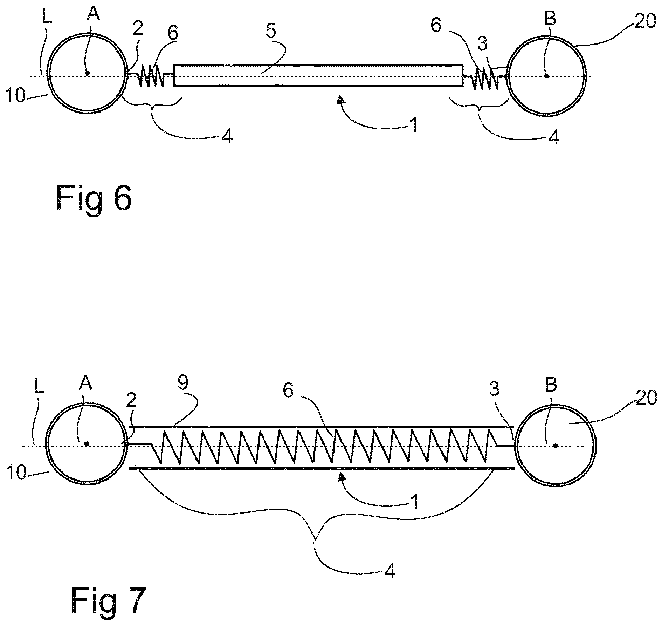

As shown in Figure 6 flexible, elastic members or string members 6 may be been arranged on each ends of the intermediate member 1. The stiffening member 5 may be arranged between flexible portions 4, such as elastic or string members 6. A connecting counterpart 8 may be arranged to a flexible member or a flexible portion 4.

As shown in Figure 7 the intermediate member 1 comprises an elastic member or a spring member 6. The intermediate member may also comprise a protective jacket 9. The protective jacket 9 may be a tube member arranged around the elastic member or the spring member 6. In an embodiment the intermediate member 1 comprises a coil spring member. When the coil spring is in a non-extended state the adjacent coils of the spring member are in contact with each other and may stiffen the intermediate member. Then the trolley poles 10, 20 or current collectors 11, 21 shall not contact to each other and short circuits and mechanical damages are avoided.

Figure 8 shows a further intermediate member (1) for use in practising the invention. The stiffening member or portion 5 may be arranged on a flexible part(s) 4 connected via connecting elements 2, 3 to first and second trolley poles 10. 20. The flexible parts 4 may be elastic member, such as a pipe or a bar. The flexible member 4 or portion may be made of elastic material, such as rubber or plastic. The stiffening member 5 may be a bar or a tube-like member, such as a pipe. The stiffening member may be made of stiff material like of metal, plastic or stiff rubber. The intermediate member 1 may be produced by a arranging a flexible material around or in the stiffening member 5, for example by casting, coating or extruding.

Figure 9 illustrates the trolley arrangement according to the invention. The first end of the intermediate member 1 is arranged to the first trolley pole 10, preferably via first connecting element 2. The intermediate member 1 may comprise a counterpart 8 for the first connecting element 2. The first connecting element 2 and the counterpart 8 form together a hinged connection, for example a swivel joint 7, between the first trolley pole 10 and the intermediate member 1. The second end of the intermediate member 1 is arranged to the second trolley pole 20 , preferably via second connecting element 3. The intermediate member 1 may comprise a counterpart 8 for the second connecting element 3. The second connecting element 3 and the counterpart 8 form together a hinged connection, for example a swivel joint 7, between the second trolley pole 20 and the intermediate member 1. According to the invention an intermediate member (1)is arranged between the first trolley pole (10) and the second trolley pole (20)such that a first end of the intermediate member is arranged at a first length (L1) on the first trolley pole (10), wherein the first length is measured from the first end (12)of the first trolley pole and a second end of the intermediate member is arranged at a second length (L2)on the second trolley pole, wherein the second length is measured from a first end (22) of the second trolley pole, and wherein the first length and the second length are of different lengths; that is first length L1 and the second length L2 are not equal. The first length L1 may be shorter that the second length L2. Alternatively, the first length L1 may be longer that the second length L2.

In an embodiment the invention relates also to a method for preventing short circuits and mechanical damages in a trolley pole arrangement comprising:
- a first trolley pole 10 having a first end 12 and a distal end 13 extending a distance from the first end,
- a second trolley pole 20 having a first end 22 and a distal end 23 extending a distance form a first end,
- a moving arrangement 30 for the first trolley pole and for the second trolley pole,
- the first trolley pole 10 is configured to be arranged from the first end 12 to the first support and moving arrangement 30,
- the second trolley pole 20 is configured to be arranged from the first end 22 to the second support and moving arrangement 30, wherein
the method comprising arranging an intermediate member 1 between the first trolley pole 10 and the second trolley pole 20 such that a first end of the intermediate member is arranged at a first length (L1) on the first trolley pole (10), wherein the first length is measured from the first end (12)of the first trolley pole and a second end of the intermediate member is arranged at a second length (L2)on the second trolley pole, wherein the second length is measured from a first end (22) of the second trolley pole, and wherein the first length and the second length are of different lengths, Z and keeping the first trolley pole and the second trolley pole at a distance from each other.

It is obvious to a person skilled in the art that with the advancement of technology, the basic idea of the invention may be implemented in various ways. The invention and its embodiments are thus not limited to the examples described above, instead they may vary within the scope of the claims.

### REFERENCE SYMBOLS

- 1: Intermediate member
- 2: First connecting element
- 3: Second connecting element
- 4: Flexible portion
- 5: Stiffening member
- 6: Spring member
- 7: Swivel joint
- 8: Connecting counterpart
- 9: Protective jacket
- 10: First trolley pole
- 11: First current collector
- 12: First end of the first trolley pole
- 13: Distal end of the first trolley pole
- 20: Second trolley pole
- 21: Second current collector
- 22: First end of the second trolley pole
- 23: Distal end of the second trolley pole
- 30: Support and moving device of trolley
- poles 100: Vehicle
- 201: First trolley line
- 202: Second trolley line
- M: Main moving direction of the vehicle
- L1: First length from a first end of a first trolley pole
- L2: Second length from a first end of a second trolley pole

## Claims

1. A trolley pole arrangement for a mobile work machine, the arrangement comprising
- a first trolley pole (10) having a first end (12) and a distal end (13) extending a distance from the first end,
- a second trolley pole (20) having a first end (22) and a distal end (23) extending a distance form the first end,
- a support and moving arrangement (30) for the first trolley pole and for the second trolley pole,
- the first trolley pole (10) is configured to be arranged from the first end (12) to the support and moving arrangement (30),
- the second trolley pole (20) is configured to be arranged from the first end (22) to the support and moving arrangement (30),
- **characterized by**
- an intermediate member (1) arranged between the first trolley pole (10) and the second trolley pole (20) such that a first end of the intermediate member is arranged at a first length (L1) on the first trolley pole (10), wherein the first length (L1) is measured from the first end (12) of the first trolley pole (10), and a second end of the intermediate member is arranged at a second length (L2) on the second trolley pole (20), wherein the second length (L2) is measured from a first end (22) of the second trolley pole (20), and wherein the first length (L1) and the second length (L2) are of different lengths.

2. The trolley pole arrangement according to claim 1, wherein the intermediate member (1) is an elongated member.

3. The trolley pole arrangement according to claim 1 or 2, wherein the intermediate member (1) comprises a flexible portion (4).

4. The trolley pole arrangement according to any one of claims 1 to 3, wherein the intermediate member (1) comprises a stiffening member or a stiffening portion (5) .

5. The trolley pole arrangement according to any one of claims 1 to 4, wherein the stiffening member (5) is a pipe or a bar or a chain.

6. The trolley pole arrangement according to any one of claims 1 to 5, wherein the intermediate member (1) comprises a protective jacket (9).

7. The trolley pole arrangement according to any one of claims 1 to 6, wherein a length of the stiffening member (5) is shorter than a distance between the first trolley pole (10) and the second trolley pole (20) when a length axis (L) of the intermediate member (1) is perpendicular to length axis (A, B) of the first trolley pole and the second trolley pole.

8. The trolley pole arrangement according to any one of claims 1 to 7, wherein the intermediate member (1) comprises a first connecting element (2) in a first end and a second connecting element (3) in a second end.

9. The trolley pole arrangement according to any one of claims 1 to 8, wherein a first connecting element (2) or a second connecting element (3) is a strap, a rope or a loop member configured to be arranged to or around the trolley pole (10, 20).

10. The trolley pole arrangement according to any one of claims 1 to 9, wherein the intermediate member (1) is arranged on a lower portion of the trolley poles (10, 20).

11. The trolley pole arrangement according to any one of claims 1 to 10, wherein the intermediate member (1) comprises an elastic member, elastic portion, or a string member (6), such as a coil string member.

12. The trolley pole arrangement according to any one of claims 1 to 11, wherein the intermediate member (1) is hingedly connected to the first trolley pole (10) or to the second trolley pole (20) or to both, for example by a swivel joint (7).

13. The trolley pole arrangement according to any one of claims 1 to 12, wherein the distal ends of the first trolley pole (10) and the second trolley pole (20) are each configured to receive a current collector (11, 21).

14. A method for preventing short circuits and mechanical damages in a trolley pole arrangement comprising:
- a first trolley pole (10) having a first end and a distal end extending a distance from the first end,
- a second trolley pole (20) having a first end and a distal end extending a distance form a first end,
- a support and moving arrangement (30) for the first trolley pole and for the second trolley pole,
- the first trolley pole (10) is configured to be arranged from the first end (12) to the support and moving arrangement (30),
- the second trolley pole (20) is configured to be arranged from the first end (22) to the support and moving arrangement (30), wherein
the method further comprises arranging an intermediate member (1) between the first trolley pole (10) and the second trolley pole (20) such that a first end of the intermediate member is arranged at a first length (L1) on the first trolley pole (10), wherein the first length (L1) is measured from the first end (12) of the first trolley pole (10), and a second end of the intermediate member is arranged at a second length (L2) on the second trolley pole (20), wherein the second length (L2) is measured from a first end (22) of the second trolley pole (20), and wherein the first length (L1) and the second length (L2) are of different lengths, and keeping the first trolley pole and the second trolley pole or current collectors (11, 21) arranged to the distal ends of the trolley poles (10, 20) at a distance from each other.

## Patentansprüche

1. Stromabnehmerstangenanordnung für eine mobile Arbeitsmaschine, wobei die Anordnung Folgendes umfasst
- eine erste Stromabnehmerstange (10) mit einem ersten Ende (12) und einem distalen Ende (13), das sich in einem Abstand von dem ersten Ende erstreckt,
- eine zweite Stromabnehmerstange (20) mit einem ersten Ende (22) und einem distalen Ende (23), das sich in einem Abstand von dem ersten Ende erstreckt,
- eine Stütz- und Bewegungsanordnung (30) für die erste Stromabnehmerstange und für die zweite Stromabnehmerstange,
- wobei die erste Stromabnehmerstange (10) so konfiguriert ist, dass sie vom ersten Ende (12) bis zur Stütz- und Bewegungsanordnung (30) angeordnet wird,
- wobei die zweite Stromabnehmerstange (20) so konfiguriert ist, dass sie vom ersten Ende (22) bis zur Stütz- und Bewegungsanordnung (30) angeordnet wird,
- **gekennzeichnet durch**
- ein Zwischenelement (1), das zwischen der ersten Stromabnehmerstange (10) und der zweiten Stromabnehmerstange (20) angeordnet ist, sodass ein erstes Ende des Zwischenelements bei einer ersten Länge (L1) an der ersten Stromabnehmerstange (10) angeordnet ist, wobei die erste Länge (L1) vom ersten Ende (12) der ersten Stromabnehmerstange (10) gemessen wird, und ein zweites Ende des Zwischenelements bei einer zweiten Länge (L2) an der zweiten Stromabnehmerstange (20) angeordnet ist, wobei die zweite Länge (L2) von einem ersten Ende (22) der zweiten Stromabnehmerstange (20) aus gemessen wird, und wobei die erste Länge (L1) und die zweite Länge (L2) unterschiedlich lang sind.

2. Stromabnehmerstangenanordnung nach Anspruch 1, wobei das Zwischenelement (1) ein längliches Element ist.

3. Stromabnehmerstangenanordnung nach Anspruch 1 oder 2, wobei das Zwischenelement (1) einen flexiblen Abschnitt (4) umfasst.

4. Stromabnehmerstangenanordnung nach einem der Ansprüche 1 bis 3, wobei das Zwischenelement (1) ein Versteifungselement oder einen Versteifungsabschnitt (5) umfasst.

5. Stromabnehmerstange nach einem der Ansprüche 1 bis 4, wobei das Versteifungselement (5) ein Rohr oder ein Stab oder eine Kette ist.

6. Stromabnehmerstangenanordnung nach einem der Ansprüche 1 bis 5, wobei das Zwischenelement (1) einen Schutzmantel (9) umfasst.

7. Stromabnehmerstangenanordnung nach einem der Ansprüche 1 bis 6, wobei eine Länge des Versteifungselements (5) kürzer ist als ein Abstand zwischen der ersten Stromabnehmerstange (10) und der zweiten Stromabnehmerstange (20), wenn eine Längsachse (L) des Zwischenelements (1) senkrecht zur Längsachse (A, B) der ersten Stromabnehmerstange und der zweiten Stromabnehmerstange verläuft.

8. Stromabnehmerstangenanordnung nach einem der Ansprüche 1 bis 7, wobei das Zwischenelement (1) ein erstes Verbindungselement (2) an einem ersten Ende und ein zweites Verbindungselement (3) an einem zweiten Ende umfasst.

9. Stromabnehmerstangenanordnung nach einem der Ansprüche 1 bis 8, wobei ein erstes Verbindungselement (2) oder ein zweites Verbindungselement (3) ein Riemen, ein Seil oder ein Schlaufenelement ist, der/das so konfiguriert ist, dass es an oder um die Stromabnehmerstange (10, 20) herum angeordnet werden kann.

10. Stromabnehmerstangenanordnung nach einem der Ansprüche 1 bis 9, wobei das Zwischenelement (1) an einem unteren Abschnitt der Stromabnehmerstangen (10, 20) angeordnet ist.

11. Stromabnehmerstangenanordnung nach einem der Ansprüche 1 bis 10, wobei das Zwischenelement (1) ein elastisches Element, einen elastischen Abschnitt oder ein Schnurelement (6), wie z. B. ein Spiralschnurelement, umfasst.

12. Stromabnehmerstangenanordnung nach einem der Ansprüche 1 bis 11, wobei das Zwischenelement (1) mit der ersten Stromabnehmerstange (10) oder mit der zweiten Stromabnehmerstange (20) oder mit beiden gelenkig verbunden ist, z. B. durch ein Drehgelenk (7).

13. Stromabnehmerstangenanordnung nach einem der Ansprüche 1 bis 12, wobei die distalen Enden der ersten Stromabnehmerstange (10) und der zweiten Stromabnehmerstange (20) jeweils so konfiguriert sind, dass sie einen Stromabnehmer (11, 21) aufnehmen.

14. Verfahren zur Verhinderung von Kurzschlüssen und mechanischen Schäden in einer Stromabnehmerstangenanordnung, umfassend:
- eine erste Stromabnehmerstange (10) mit einem ersten Ende und einem distalen Ende, das sich in einem Abstand von dem ersten Ende erstreckt,
- eine zweite Stromabnehmerstange (20) mit einem ersten Ende und einem distalen Ende, das sich in einem Abstand von einem ersten Ende erstreckt,
- eine Stütz- und Bewegungsanordnung (30) für die erste Stromabnehmerstange und für die zweite Stromabnehmerstange,
- wobei die erste Stromabnehmerstange (10) so konfiguriert ist, dass sie vom ersten Ende (12) bis zur Stütz- und Bewegungsanordnung (30) angeordnet wird,
- wobei die zweite Stromabnehmerstange (20) so konfiguriert ist, dass sie vom ersten Ende (22) bis zur Stütz- und Bewegungsanordnung (30) angeordnet wird, wobei
das Verfahren weiter das Anordnen eines Zwischenelements (1) zwischen der ersten Stromabnehmerstange (10) und der zweiten Stromabnehmerstange (20) umfasst, sodass ein erstes Ende des Zwischenelements bei einer ersten Länge (L1) an der ersten Stromabnehmerstange (10) angeordnet ist, wobei die erste Länge (L1) vom ersten Ende (12) der ersten Stromabnehmerstange (10) gemessen wird, und ein zweites Ende des Zwischenelements bei einer zweiten Länge (L2) an der zweiten Stromabnehmerstange (20) angeordnet ist, wobei die zweite Länge (L2) von einem ersten Ende (22) der zweiten Stromabnehmerstange (20) aus gemessen wird, und wobei die erste Länge (L1) und die zweite Länge (L2) unterschiedlich lang sind und die erste Stromabnehmerstange und die zweite Stromabnehmerstange oder Stromabnehmer (11, 21), die an den distalen Enden der Stromabnehmerstangen (10, 20) angeordnet sind, in einem Abstand zueinander gehalten werden.

## Revendications

1. Agencement de perches de trolley pour un engin de travail mobile, l'agencement comprenant
- une première perche de trolley (10) présentant une première extrémité (12) et une extrémité distale (13) s'étendant à une certaine distance de la première extrémité,
- une seconde perche de trolley (20) présentant une première extrémité (22) et une extrémité distale (23) s'étendant à une certaine distance de la première extrémité,
- un agencement de support et de déplacement (30) pour la première perche de trolley et pour la seconde perche de trolley,
- la première perche de trolley (10) est configurée pour être agencée à partir de la première extrémité (12) sur l'agencement de support et de déplacement (30),
- la seconde perche de trolley (20) est configurée pour être agencée à partir de la première extrémité (22) sur l'agencement de support et de déplacement (30),
- **caractérisé par**
- un élément intermédiaire (1) agencé entre la première perche de trolley (10) et la seconde perche de trolley (20) de sorte qu'une première extrémité de l'élément intermédiaire est agencée au niveau d'une première longueur (L1) sur la première perche de trolley (10), dans lequel la première longueur (L1) est mesurée à partir de la première extrémité (12) de la première perche de trolley (10), et une seconde extrémité de l'élément intermédiaire est agencée au niveau d'une seconde longueur (L2) sur la seconde perche de trolley (20), dans lequel la seconde longueur (L2) est mesurée à partir de la première extrémité (22) de la seconde perche de trolley (20), et dans lequel la première longueur (L1) et la seconde longueur (L2) sont de longueurs différentes.

2. Agencement de perches de trolley selon la revendication 1, dans lequel l'élément intermédiaire (1) est un élément allongé.

3. Agencement de perches de trolley selon la revendication 1 ou 2, dans lequel l'élément intermédiaire (1) comprend une partie flexible (4).

4. Agencement de perches de trolley selon l'une quelconque des revendications 1 à 3, dans lequel l'élément intermédiaire (1) comprend un élément de raidissement ou une partie de raidissement (5).

5. Agencement de perches de trolley selon l'une quelconque des revendications 1 à 4, dans lequel l'élément de raidissement (5) est un tube ou une barre ou une chaîne.

6. Agencement de perches de trolley selon l'une quelconque des revendications 1 à 5, dans lequel l'élément intermédiaire (1) comprend une gaine de protection (9).

7. Agencement de perches de trolley selon l'une quelconque des revendications 1 à 6, dans lequel une longueur de l'élément de raidissement (5) est plus courte qu'une distance entre la première perche de trolley (10) et la seconde perche de trolley (20) quand un axe longitudinal (L) de l'élément intermédiaire (1) est perpendiculaire à l'axe longitudinal (A, B) de la première perche de trolley et de la seconde perche de trolley.

8. Agencement de perches de trolley selon l'une quelconque des revendications 1 à 7, dans lequel l'élément intermédiaire (1) comprend un premier élément de liaison (2) dans une première extrémité et un second élément de liaison (3) dans une seconde extrémité.

9. Agencement de perches de trolley selon l'une quelconque des revendications 1 à 8, dans lequel un premier élément de liaison (2) ou un second élément de liaison (3) est une sangle, une corde ou un élément à boucle configuré(e) pour être agencé(e) sur ou autour de la perche de trolley (10, 20).

10. Agencement de perches de trolley selon l'une quelconque des revendications 1 à 9, dans lequel l'élément intermédiaire (1) est agencé sur une partie inférieure des perches de trolley (10, 20).

11. Agencement de perches de trolley selon l'une quelconque des revendications 1 à 10, dans lequel l'élément intermédiaire (1) comprend un élément élastique, une partie élastique ou un élément à cordon (6), tel un élément à cordon hélicoïdal.

12. Agencement de perches de trolley selon l'une quelconque des revendications 1 à 11, dans lequel l'élément intermédiaire (1) est relié de manière articulée à la première perche de trolley (10) ou à la seconde perche de trolley (20) ou aux deux, par exemple par une articulation pivotante (7).

13. Agencement de perches de trolley selon l'une quelconque des revendications 1 à 12, dans lequel les extrémités distales de la première perche de trolley (10) et de la seconde perche de trolley (20) sont chacune configurées pour recevoir un collecteur de courant (11, 21).

14. Procédé de prévention de courts-circuits et de dommages mécaniques dans un agencement de perches de trolley comprenant :
- une première perche de trolley (10) présentant une première extrémité et une extrémité distale s'étendant à une certaine distance de la première extrémité,
- une seconde perche de trolley (20) présentant une première extrémité et une extrémité distale s'étendant à une certaine distance d'une première extrémité,
- un agencement de support et de déplacement (30) pour la première perche de trolley et pour la seconde perche de trolley,
- la première perche de trolley (10) est configurée pour être agencée à partir de la première extrémité (12) sur l'agencement de support et de déplacement (30),
- la seconde perche de trolley (20) est configurée pour être agencée à partir de la première extrémité (22) sur l'agencement de support et de déplacement (30), dans lequel
le procédé comprend en outre l'agencement d'un élément intermédiaire (1) entre la première perche de trolley (10) et la seconde perche de trolley (20) de sorte qu'une première extrémité de l'élément intermédiaire est agencée à une première longueur (L1) sur la première perche de trolley (10), dans lequel la première longueur (L1) est mesurée à partir de la première extrémité (12) de la première perche de trolley (10), et une seconde extrémité de l'élément intermédiaire est agencée à une seconde longueur (L2) sur la seconde perche de trolley (20), dans lequel la seconde longueur (L2) est mesurée à partir d'une première extrémité (22) de la seconde perche de trolley (20), et dans lequel la première longueur (L1) et la seconde longueur (L2) sont de longueurs différentes, et le maintien de la première perche de trolley et de la seconde perche de trolley ou des collecteurs de courant (11, 21) agencés aux extrémités distales des perches de trolley (10, 20) à une certaine distance l'un de l'autre.
